# EUROPEAN PATENT APPLICATION

(11) **EP 4 345 061 A1**
(43) Date of publication of application: **03.04.2024**
(21) Application number: 23194328.3
(22) Date of filing: 30.08.2023
(51) Int. Cl.: C01B 25/37, C01B 25/45, H01M 4/04, H01M 4/58

(54) **PREPARATION METHOD OF BATTERY COMPOSITE MATERIAL AND PRECURSOR THEREOF**

(30) Priority: 05.09.2022 TW 111133528
(71) Applicant: Advanced Lithium Electrochemistry Co., Ltd., Taoyuan City 33068 (TW)
(72) Inventor: FU, KUAN-YIN, 33068 Taoyuan City (TW); WANG, JING-XUAN, 33068 Taoyuan City (TW); HUANG, AN-FENG, 33068 Taoyuan City (TW)
(74) Representative: Cabinet Chaillot

(57) **Abstract**

The present invention provides a preparation method of a battery composite material, wherein a precursor with the chemical formula FePO₄ is formed by introducing air or oxygen during calcination. The precursor is then reacted with a first reactant containing lithium atoms and a carbon source to form a battery composite material with the chemical formula LiFePO₄.

## Description

### FIELD OF THE INVENTION

The present invention relates to a battery composite material, and more particularly to a preparation method of a battery composite material and its precursor.

### BACKGROUND OF THE INVENTION

With the advancement of technology, the development of electronic products and transportation equipment has brought great convenience to modern life. Aligned with the global trend of increasing environmental awareness in recent years, achieving energy savings while maintaining convenience has become a key industry goal. This has garnered significant attention and led to the rapid development of energy storage technologies in secondary batteries.

Among these, lithium iron phosphate (LiFePO₄, LFP) stands out as one of the most widely used battery materials. It offers advantages such as low cost, high safety, low environmental pollution, and the ability to withstand high current charging and discharging. Additionally, the raw materials are relatively inexpensive, making it highly suitable for high-power applications such as electric vehicles that require high current and large capacity. However, in order to overcome the issues of low conductivity and high impurity content in conventional lithium iron phosphate batteries, the development of lithium iron phosphate nano co-crystalline olivine (LFP-NCO), a single-phase structure composed of phosphorus, lithium, and iron, has been developed.

In the production process of LFP-NCO, iron salts (such as iron nitrate or ferrous sulfate) are commonly used as raw materials, mixed with phosphates, and subjected to nitrogen gas to produce iron phosphate. It is then reacted with lithium hydroxide, lithium carbonate, or other compounds containing lithium atoms. However, in the production process of iron phosphate, the involvement of groups such as nitrate ions, sulfate ions, or nitrogen gas often leads to the generation of salt by-products or impurities. Therefore, additional separation steps are required to isolate these salt by-products or impurities from the iron phosphate to prevent equipment corrosion caused by the gas by-products generated by nitrate or sulfate groups during subsequent calcination. The process of iron phosphate production should not only control the pH value of the reaction environment, but also completely remove salt by-products generated during the reaction, in order to prevent a compromise to the product quality. Moreover, the by-products require separate treatment, leading to increased costs and contradicting the principles of environmentally conscious manufacturing processes.

### SUMMARY OF THE INVENTION

In order to overcome the challenges encountered in the production of LFP-NCO battery materials, such as strict requirements of pH values, handling by-products, mitigating process difficulties, waste management, and potential negative impact on product quality, the present invention provides a preparation method of a battery composite material, comprising steps of:
step 1: reacting a compound capable of releasing a phosphate ion with iron powders to produce a first product in a slurry form;
step 2: forming a precursor via grinding, drying, and calcining, wherein the precursor has a chemical formula of FePO₄; and
step 3: reacting the precursor with a first reactant containing lithium atoms and a carbon source containing carbon atoms to form a battery composite material with a chemical formula of LiFePO₄;
wherein air or oxygen is directly introduced during calcining.

Wherein, a metal oxide is added and reacted in step 3 to form the battery composite material, wherein the battery composite material is LFP-NCO with metal oxide.

Wherein, the metal oxide can be vanadium pentoxide (V₂O₅) or magnesium oxide (MgO).

Wherein, the compound can be phosphoric acid, and the chemical formula of the first product can be a-FePO₄ • xH₂O, wherein x is greater than zero (0).

Wherein, the first reactant can be selected from lithium carbonate (Li₂CO₃), lithium hydroxide (LiOH), or a mixture of lithium containing compounds.

Wherein, the carbon source can be selected from saccharides, organic compounds, polymers, or polymeric materials.

Wherein, the saccharides can be selected from monosaccharides or disaccharides. Preferably, the monosaccharides can be selected from among fructose, glucose, or galactose. Preferably, the disaccharides can be selected from maltose, sucrose, or lactose. Preferably, the polymeric materials can be polyvinylpyrrolidone (PVP).

Further, step 2 comprises:
grinding the first product until the average particle size (D50) of the first product is less than 5 micrometers (µm);
spray drying the first product that has been ground to form a powder; and
introducing air or oxygen to calcine the powder to form the precursor.

Further, the first product is ground at a rotating speed of 450 to 650 revolution per minute (rpm);
performing spray drying with a rotary disk spray dryer, wherein the rotary disk spray dryer includes:
an inlet temperature ranges from 180°C to 230°C;
an outlet temperature ranges from 80°C to 100°C; and
a rotating speed frequency of the rotary disk spray dryer at 350 Hertz (Hz); and
a calcination temperature of the powder ranges from 550°C to 700°C, and a calcination time ranges from 30 minutes to 1.5 hours.

Even further, the average particle size (D50) of the first product can be less than 2 µm;
the rotating speed is 500 rpm;
the inlet temperature ranges from 200°C to 220°C;
the outlet temperature ranges from 85°C to 95°C; and
the calcination temperature of the powder ranges from 600°C to 650°C.

Additionally, the present invention provides a preparation method of a battery composite material, the preparation method comprises: reacting a precursor, with a chemical formula of FePO₄, with a first reactant containing lithium atoms and a carbon source containing carbon atoms, thereby forming a battery composite material with a chemical formula of LiFePO₄.

Moreover, the present invention provides a preparation method of a precursor for a battery composite material, wherein the steps include:
reacting a compound capable of releasing a phosphate ion with iron powder to produce a first product in a slurry form;
forming a precursor via grinding, drying, and calcining, with the chemical formula of the precursor being FePO₄.

The preparation method of the battery composite material and its precursor provided by the present invention not only simplifies the process, but also allows for the preparation of the battery composite material without the limitation of using lithium hydroxide, reducing the restriction of strict control of pH value during the process, and significantly shortening the overall process time. Moreover, through the reaction of phosphoric acid, deionized water, and iron powder, and the technique of introducing air during calcination, the cost of raw materials is effectively reduced under the premise of complete reaction between the phosphoric acid solution and iron powder. As there are no additional elements that may remain in the final product, there is no need for additional steps for impurity separation. The atomic utilization rate from raw materials to the final product is extremely high, and there will be no issues related to waste disposal, which is in line with the current trend of advocating for sustainable manufacturing.

### BRIEF DESCRIPTION OF THE DRAWINGS

Fig. 1 is a flowchart of the preparation method of a preferred embodiment of the present invention;
Fig. 2 is a detailed flowchart of the first part of a preferred embodiment of the present invention;
Fig. 3 is a detailed flowchart of the second part of a preferred embodiment of the present invention;
Fig. 4 is an X-ray diffraction pattern of the precursor in a preferred embodiment of the present invention;
Fig. 5 is an X-ray diffraction pattern of the precursor in a comparative example of the present invention;
Fig. 6A is a scanning electron microscope (SEM) image of the precursor in an embodiment of the present invention;
Fig. 6B is a SEM image of the precursor in a comparative example of the present invention;
Fig. 7A is a SEM image of the first preferred embodiment of the present invention;
Fig. 7B is a SEM image of the second preferred embodiment of the present invention;
Fig. 8A is a SEM image of the first comparative example of the present invention;
Fig. 8B is a SEM image of the second comparative example of the present invention;
Fig. 9 is a charge-discharge characteristic diagram of the final product in a preferred embodiment of the present invention; and
Fig. 10 is a charge-discharge characteristic diagram of the final product in a comparative example of the present invention.

### DETAILED DESCRIPTION OF THE PREFERRED EMBODIMENTS

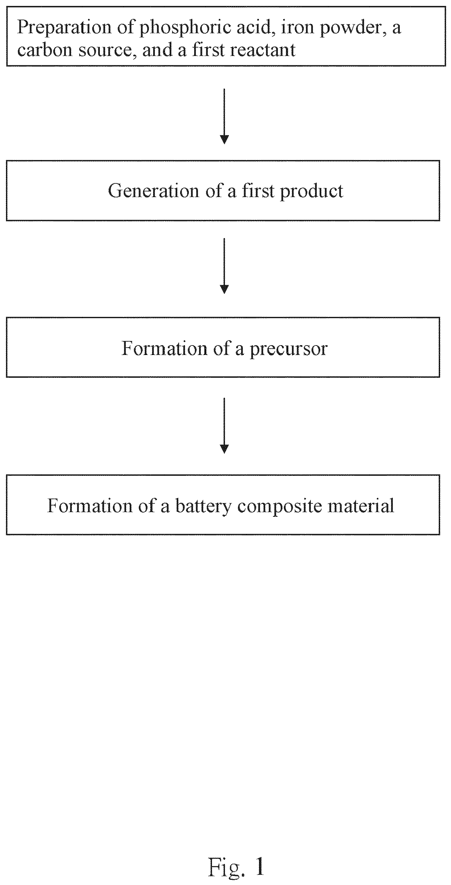

Please refer to Fig. 1, which is a flowchart of the preparation method of a battery composite material provided by the present invention. The methods include steps of:

S1, Preparation of phosphoric acid (H₃PO₄), iron powder (Fe), a carbon source, and a first reactant: The carbon source can be saccharides, organic compounds, polymers, or polymeric materials containing carbon atoms. The first reactant is a compound containing lithium atoms.

For instance, when the carbon source is a saccharide, the carbon source can be monosaccharides such as fructose, glucose, or galactose, or disaccharides such as maltose, sucrose, or lactose.

As another example, when the carbon source is a polymeric material, it can be polyvinylpyrrolidone (PVP).

The first reactant can be lithium carbonate (Li₂CO₃), lithium hydroxide (LiOH), or a mixture of several lithium-containing compounds.

S2, Generation of a first product: Phosphoric acid is reacted with iron powders to produce a first product. The first product is in a slurry form with a chemical formula of a-FePO₄ • xH₂O, where x is greater than zero (0).

S3, Formation of a precursor: Through grinding, drying, and calcination, a precursor with a chemical formula of FePO₄ is produced. During calcination, air or oxygen is directly introduced, replacing the traditional process of calcination with nitrogen, thereby simplifying the steps and reducing costs.

S4, Formation of a battery composite material: The precursor is reacted with the first reactant through procedures such as grinding, drying, and calcination, forming a powdery battery composite material with a chemical formula of LiFePO₄. In this step, the carbon source is added simultaneously, making the battery composite material form a carbon-coated surface and achieve better electroconductive properties.

At Step S4, a metal oxide, such as vanadium pentoxide (V₂O₅) or magnesium oxide (MgO), can be simultaneously added to produce a LiFePO₄ battery composite material that contains metal oxides, also known as LFP-NCO.

The provided preparation method of the battery composite material of the present invention involves directly using iron powders as the starting material for the reaction, which reacted with phosphoric acid to generate the battery composite material. Other than lithium, iron, phosphorus, and oxygen, no other additional elements participated in the whole process. During the whole process, only the hydrogen ions from phosphoric acid form hydrogen gas and diffuse into the atmosphere. This process not only has high atomic efficiency, fitting in with the modern pursuit of environmental sustainability, but also does not produce by-products, thus eliminating the need for extra separation steps afterwards.

The provided preparation method of the battery composite material of the present invention does not include any other additional elements, and it further proceeds by directly introducing air or oxygen, ensuring no by-products are generated during the process. This prevents the battery composite material from being contaminated with impurities, and avoids damaging equipment in subsequent calcination processes.

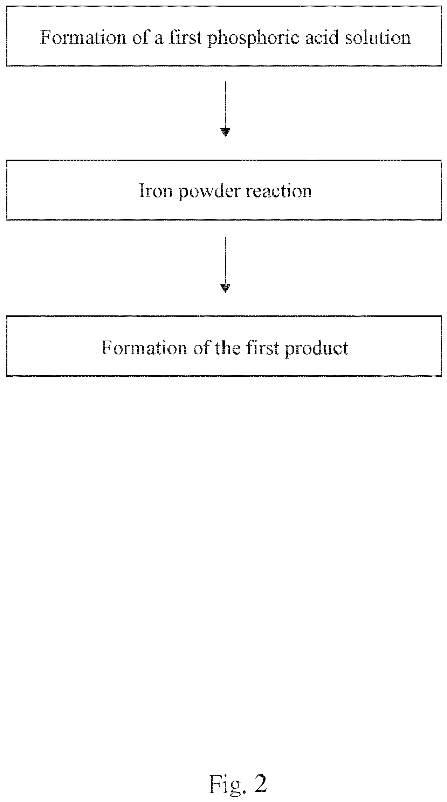

Further, please refer to the detailed flowchart of Step S2 provided in Fig. 2. Step S2 further includes the following steps:

S201, Formation of a first phosphoric acid solution: At a first temperature, phosphoric acid is quantified using deionized water to form a first phosphoric acid solution. The first temperature is maintained within the range of 40°C to 50°C, preferably 42°C.

S202, Iron powder reaction: At a second temperature, the first phosphoric acid solution reacts with the iron powders, and the temperature is loared to a third temperature for a first reaction time. The second temperature is equal to or lower than 60°C, preferably 60°C; the third temperature is equal to or lower than 50°C, preferably 50°C; the first reaction time is at least 3 hours.

S203, Formation of the first product: Phosphoric acid is quantified with deionized water to form a second phosphoric acid solution. At a fourth temperature, the second phosphoric acid solution is added to the mixture produced from Step S202, and keep for a second reaction time, forming an iron phosphate slurry. The phosphate slurry contains at least one phosphate ion, one iron ion, and the first product composed of phosphate, iron, and water, with a chemical formula of a-FePO₄ • xH₂O, wherein x is greater than zero (x>0).

The fourth temperature is equal to or lower than 30°C, preferably 30°C; the second reaction time is at least 23 hours.

The weight ratio of the first phosphoric acid solution to the second phosphoric acid solution after quantification is 3:1. That is, when the weight percentage of the quantified first phosphoric acid solution was 75%, the weight percentage of the quantified second phosphoric acid solution was 25%.

In Steps S202 and S203, phosphate ions are released and reacts with iron powders. Similarly, other compounds that can release phosphate ions after mixing could replace the first phosphoric acid solution or the second phosphoric acid solution.

Through Steps S202 and S203, the iron powder could fully react with the phosphate ions and generate the first product under conditions of different concentrations of the phosphoric acid solution, different temperatures, and different reaction times. This effectively avoids material waste.

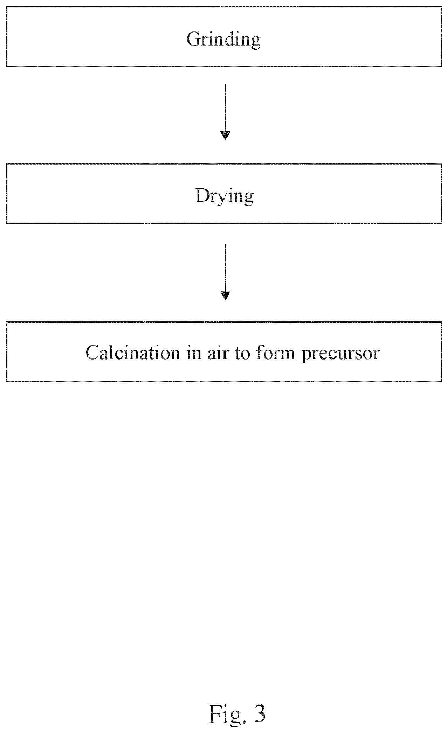

Subsequently, after Step S2, please refer to the detailed flowchart of Step S3 provided in Fig. 3. Step S3 includes the following steps:

S301, Grinding: The first product is ground at a first rotating speed until the average particle size (D50) of the first product was less than 5µm; preferably less than 2µm. The first rotating speed is within the range of 450 rpm to 650 rpm; preferably 550 rpm.

S302, Drying: The ground first product is spray-dried using a rotary disk spray dryer to form powders. Furthermore, the inlet temperature of the rotary disk spray dryer is within the range of 180°C to 230°C; preferably within the range of 200°C to 220°C; the outlet temperature is within the range of 80°C to 100°C; preferably within the range of 85°C to 95°C; and the rotating speed frequency was 350 Hz.

S303, calcinations in air to form precursor: The dried powders are calcined with stirring at appropriate times to ensure full contact of the powders with air or oxygen to form the precursor (FePO₄). Notably, during calcination, air or oxygen could be directly introduced without adding extra elements, replacing the traditional nitrogen calcination process, simplifying the step and reducing costs. The calcination temperature is within the range of 550°C to 700°C; preferably within the range of 600°C to 650°C; the calcination time is less than 3 hours; preferably within the range of 30 minutes to 1.5 hours. In this step, through the calcination of the powders with air or oxygen, the phosphate ion, the iron ions, and the first product in the powders can be fully combined and dehydrated, resulting in the pure precursor FePO₄.

The present invention further provides a detailed process for the reaction of the precursor with the first reactant at Step S4 to form the battery composite material, including:

Grinding: The precursor and the first reactant are ground at a second rotating speed until the average particle size (D50) of the mixture of the precursor and the first reactant was less than 2 µm; preferably less than 1 µm. The second rotating speed is within the range of 450 rpm to 650 rpm; preferably 550 rpm.

Drying: The ground mixture of the precursor and the first reactant is spray-dried using the rotary disk spray dryer, forming a second powder. Furthermore, the inlet temperature of the rotary disk spray dryer is within the range of 170°C to 250°C; the outlet temperature is within the range of 70°C to 110°C.

Calcining: Nitrogen is introduced to calcine the second powder, forming the battery composite material LiFePO₄ in powder form.

The aforementioned battery composite material is low cost and the process is simple. The method of this disclosure does not need special and higher-cost reactants, thereby reducing costs, overcomes the difficulties of controlling pH value and temperature of the environment of reactions encountered in traditional battery material manufacturing process, prevents excessive waste of raw materials, and improves product quality.

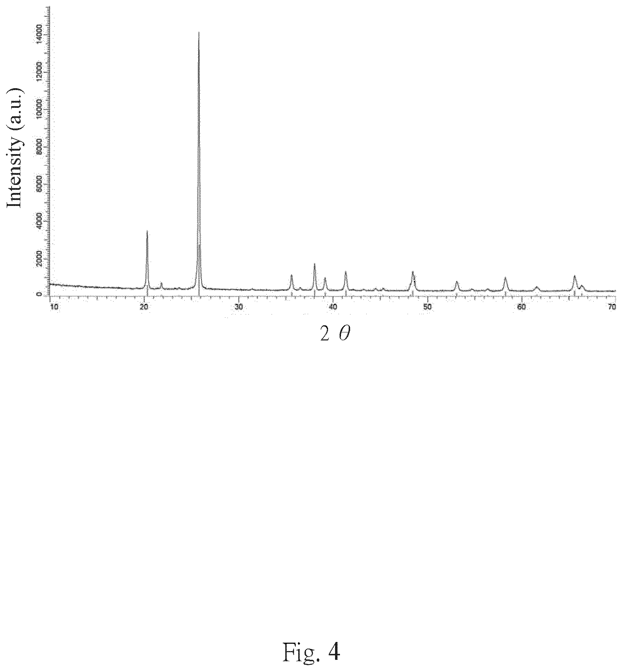

Please refer to Fig. 4 to Fig. 8B. This invention then provides the following exemplary embodiments based on the aforementioned steps, and compares the embodiments to comparative examples of introducing nitrogen during calcination. In a first embodiment, air is introduced in Step S303 for calcination, and in a second embodiment, in addition to introducing air in Step S303 for calcination, metal oxide vanadium pentoxide is further added in Step S4. First comparative example introduced nitrogen in Step S303 for calcination, while second comparative example further added metal oxide vanadium pentoxide in Step S4.

### 〈First embodiment〉

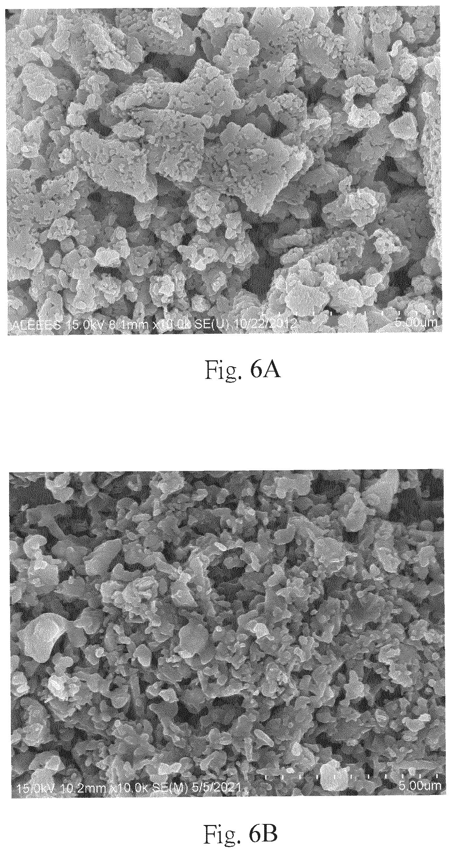

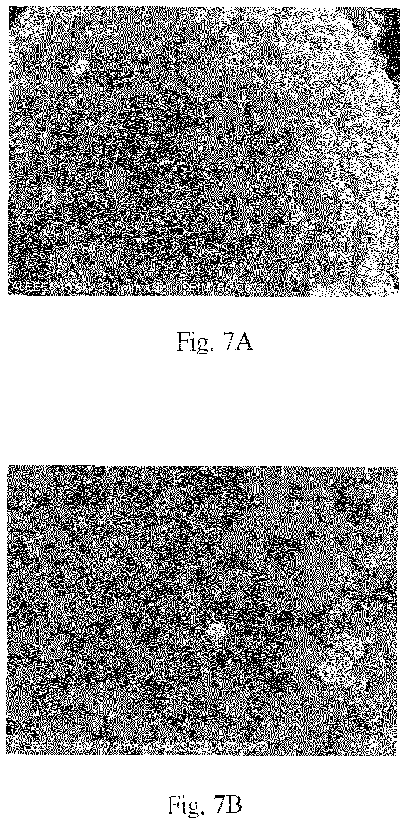

Prepare 3196 grams (g) of phosphoric acid, 10 liters (L) of deionized water, and 2532 g of iron powders. Steps S2 and S3 are performed to obtain the FePO₄ precursor. The structure of this precursor is FePO₄, confirmed with X-ray Diffraction (XRD) analysis by comparison with the standard diffraction spectrum (JCPDS Card), as shown in Fig. 4. The surface morphology of the precursor is displayed in the scanning electron microscope (SEM) analysis in Fig. 6A. Then, the 1056 g of FePO₄ precursor and 264 g of lithium carbonate (Li₂CO₃) reacts with 49 g of fructose and 25 g of polyethylene glycol to form a battery composite material as a LFP of the first embodiment. The surface morphology of the LFP, as shown in the SEM analysis, is displayed in Fig. 7A.

### 〈Second embodiment〉

Prepare 3196 g of phosphoric acid, 10 L of deionized water, and 2532 g of iron powders. Steps S2 and S3 are performed to obtain the FePO₄ precursor. Then, the obtained 1056 g of FePO₄ and 264 g of lithium carbonate (Li₂CO₃) to react with 49 g of fructose, 25 g of polyethylene glycol, and 2.7 g of vanadium pentoxide (V₂O₅) to form the battery composite material, denoted as an LFP-V of the second embodiment. The surface morphology of the LFP-V, as shown in the SEM analysis, is displayed in Fig. 7B.

### 〈First comparative example〉

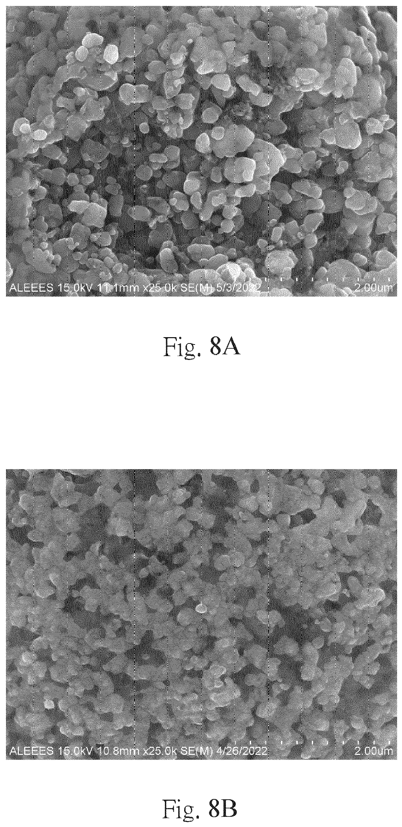

Prepare 3196 g of phosphoric acid, 10 L of deionized water, and 2532 g of iron powders. Steps S2 and S3 are performed to generate the first product. However, during step S3, when calcination is conducted to form a precursor, nitrogen gas is introduced, and a precursor with a molecular formula of Fe₇(PO₄)₆ is finally obtained. The precursor of the first comparative example is confirmed to have a structure of Fe₇(PO₄)₆ by comparing it with the JCPDS Card after XRD analysis, as shown in Fig. 6B. The surface morphology of the precursor in this example is displayed in the SEM analysis in Fig. 6B. Then, the obtained 1056 g of the Fe₇(PO₄)₆ precursor and 264 g of lithium carbonate (Li₂CO₃) reacts with 49 g of fructose and 25 g of polyethylene glycol to form the battery composite material, denoted as an LFP-N of the first comparative example. The surface morphology of the LFP-N, as shown in SEM analysis, is displayed in Fig. 8A.

### < Second comparative example〉

Prepare 3196 g of phosphoric acid, 10 L of deionized water, and 2532 g of iron powders. Steps S2 and S3 are performed to generate the first product. Again, different from the first and the second embodiments, during Step S3, nitrogen gas is introduced when calcination is conducted to form a precursor, and a precursor with a molecular formula of Fe₇(PO₄)₆ is obtained. Then, the obtained 1056 grams of the Fe₇(PO₄)₆ precursor reacts with 49 g of fructose, 25 g of polyethylene glycol, and 2.7 g of vanadium pentoxide (V₂O₅) to form the battery composite material, denoted as an LFP-V-N of the second comparative example. The surface morphology of the LFP-V-N, as shown in SEM analysis, is shown in Fig. 8B.

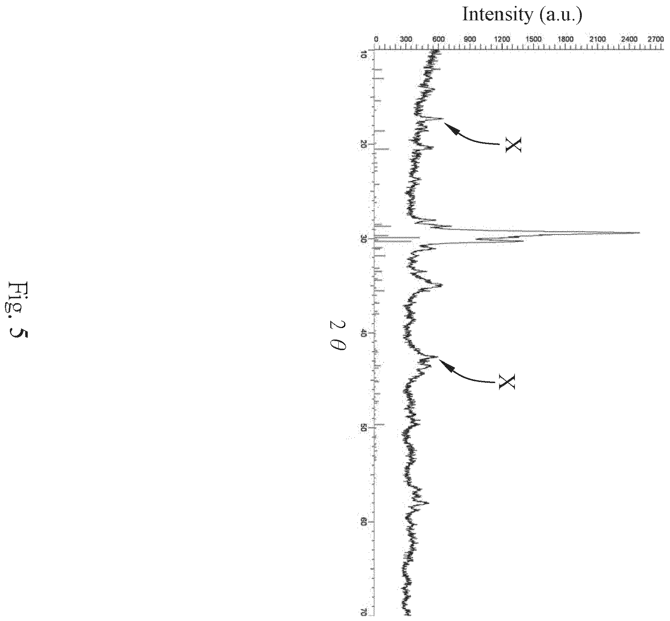

With comparsion of Fig. 4 and Fig. 5, it can be noted that Fig. 5 includes multiple waves X, not recorded in the JCPDS Card, suggesting that the precursor of Fe₇(PO₄)₆ contains other iron compounds. When preparing this precursor, the molar ratio of iron atoms to phosphorus atoms in the raw material ratio of the iron powders and phosphoric acid is 1:1, which was the same as the molar ratio of iron atoms to phosphorus atoms in the precursor produced after calcination in the first embodiment and the second embodiment of this invention. In the first comparative example and the second comparative example, as it was not possible to determine the iron compound from the JCPDS Card, the yield of the precursor Fe₇(PO₄)₆ in the these examples could not be confirmed whether the molar ratio of iron atoms to phosphorus atoms is also 1:1. Hence, it can be inferred that other iron compounds are also produced during the production of the precursor Fe₇(PO₄)₆ in the first comparative example and the second comparative example. The data indicate that the preparation method of the battery composite material in accordance with this invention can achieve excellent atom efficiency.

With reference to Figs. 4 to 8B and TABLE 1 below, particles of the Fe₇(PO₄)₆ precursors produced in the first comparative examples and the second comparative examples are smaller, much more porous. The precursor has a specific surface area of about 7.4 square meters per gram (m²/g). The specific surface areas of the LFP-N of the first comparative example and the LFP-V-N of the second comparative example with further reactions are 17.77 m²/g and 17.50 m²/g, respectively. The FePO₄ precursor provided in accordance with this invention has larger particles, fewer pores, and a specific surface area of about 3.5 m²/g. The specific surface areas of the LFP of the first embodiment and the LFP-V of the second embodiment with further reactions are 8.21 m²/g and 9.69 m²/g, respectively. The specific surface area of the precursor (FePO₄) and the battery composite material (the LFP and the LFP-V) produced in the first embodiment and the second embodiment are significantly smaller than those of the precursor (Fe₇(PO₄)₆) and the battery composite material (the LFP-N and the LFP-V-N) produced in the first comparative example and the second comparative example. Due to the higher overall packing density of the FePO₄ precursor, the battery composite material prepared from the FePO₄ precursor can provide a higher energy density.

**TABLE 1**

| | Precursor | | Battery composite material | | |
|---|---|---|---|---|---|
| | Calcination gas | Main component | Sample name | Contains V₂O₅ | Specific surface area (m²/g) |
| First embodiment | Air | FePO₄ | LFP | Yes | 8.21 |
| Second embodiment | Air | FePO₄ | LFP-V | No | 9.69 |
| First comparative example | N_{2(g)} | Fe₇(PO₄)₆ | LFP-N | Yes | 17.77 |
| Second comparative example | N_{2(g)} | Fe₇(PO₄)₆ | LFP-V -N | No | 17.50 |

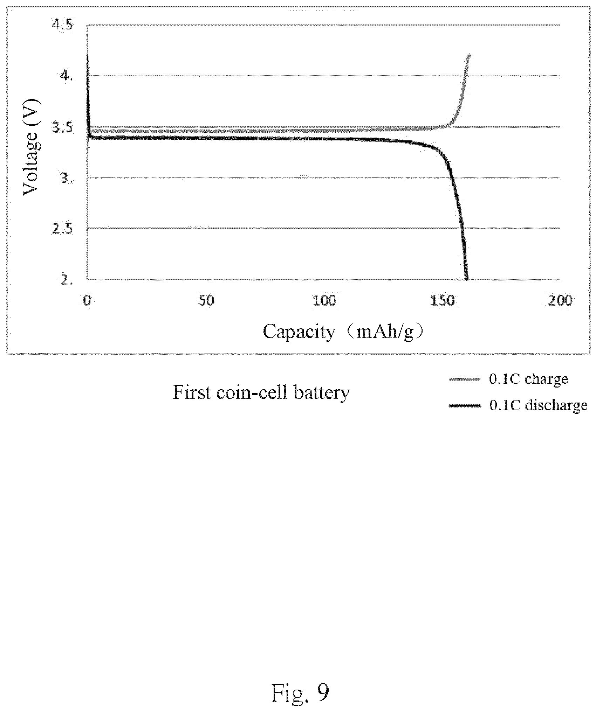

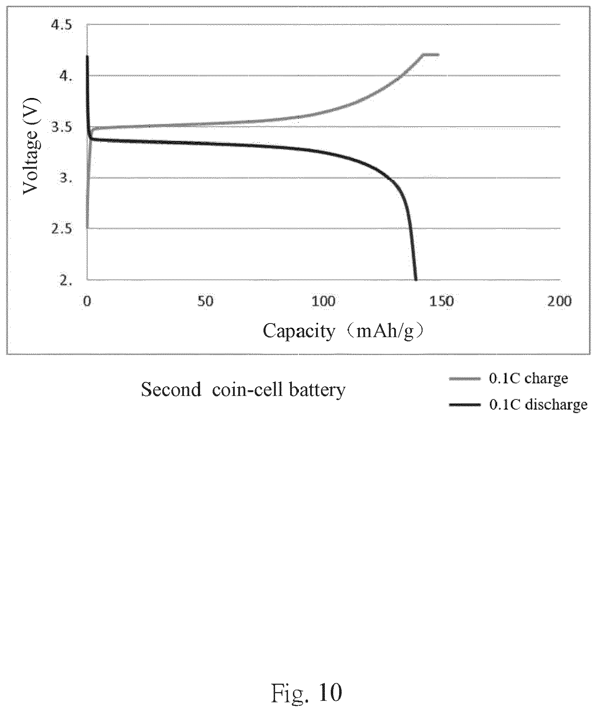

The battery composite materials obtained from the aforementioned first embodiment and the first comparative example are each used to construct a first coin-cell battery and a second coin-cell battery, respectively. Electrical property tests are conducted using a charge-discharge tester, with 2 cycles of 0.1 Coulomb charge-discharge and 2 cycles of 2 Coulomb charge-discharge. The test results for the first coin-cell battery are shown in Fig. 9, while the test results for the second coin-cell battery are shown in Fig. 10. It can be seen that although the cut-off voltages of both the first coin-cell battery (made of FePO₄) and the second coin-cell battery (made of Fe₇(PO₄)₆) are within the range of 2 to 4.2 volts and the discharge rates are the same, the discharge curve of the first coin-cell battery clearly demonstrates a superior electrical capacity. This makes the first coin-cell battery constructed with the battery composite materials of the first embodiment suitable for use in energy storage lithium batteries and has longer usage time.

The preparation method of the battery composite materials and their precursors provided by the present invention is not only simple but also enables the preparation of battery composite materials without being limited to the use of lithium hydroxide. This significantly shortening the overall process time.

## Claims

1. A preparation method of a battery composite material, comprising steps of:
step 1: reacting a compound capable of releasing a phosphate ion with iron powders to produce a first product in a slurry form;
step 2: forming a precursor via grinding, drying, and calcining, wherein the precursor has a chemical formula of FePO₄; and
step 3: reacting the precursor with a first reactant containing lithium atoms and a carbon source containing carbon atoms to form a battery composite material with a chemical formula of LiFePO₄;
wherein air or oxygen is directly introduced during calcining.

2. The preparation method of a battery composite material as claimed in claim 1, wherein in step 3, a metal oxide is added to react with the precursor, the first reactant, and the carbon source, forming a LiFePO₄ battery composite material that incorporates a metal oxide.

3. The preparation method of a battery composite material as claimed in claim 2, wherein the battery composite material is lithium iron phosphate nano co-crystalline olivine (LFP-NCO).

4. The preparation method of a battery composite material as claimed in claims 1 wherein the compound is a phosphoric acid, and the chemical formula of the first product is a-FePO₄·xH₂O, wherein x is greater than zero;
the first reactant is selected from lithium carbonate (Li₂CO₃), lithium hydroxide (LiOH), or a mixture containing lithium compounds; and
the carbon source is selected from saccharides, organic compounds, polymers, or polymeric materials.

5. The preparation method of a battery composite material as claimed in claims 2, wherein the compound is a phosphoric acid, and the chemical formula of the first product is a-FePO₄·xH₂O, wherein x is greater than zero;
the first reactant is selected from lithium carbonate (Li₂CO₃), lithium hydroxide (LiOH), or a mixture containing lithium compounds; and
the carbon source is selected from saccharides, organic compounds, polymers, or polymeric materials.

6. The preparation method of a battery composite material as claimed in claim 4, wherein the saccharides are selected from monosaccharides or disaccharides.

7. The preparation method of a battery composite material as claimed in claim 6, wherein the monosaccharides are selected from fructose, glucose, or galactose; the disaccharides are selected from maltose, sucrose, or lactose.

8. The preparation method of a battery composite material as claimed in claim 4, wherein the polymeric material is polyvinylpyrrolidone (PVP).

9. The preparation method of a battery composite material as claimed in claim 1, wherein step 2 further comprises:
grinding the first product until the average particle size (D50) of the first product is less than 5 micrometers (µm);
spray drying the first product that has been ground to form a powder; and
introducing air or oxygen to calcine the powder to form the precursor.

10. The preparation method of a battery composite material as claimed in claim 7, wherein:
the first product is ground at a rotating speed of 450 to 650 revolution per minute (rpm);
performing spray drying with a rotary disk spray dryer, wherein the rotary disk spray dryer includes:
an inlet temperature ranges from 180°C to 230°C;
an outlet temperature ranges from 80°C to 100°C; and
a rotating speed frequency of the rotary disk spray dryer at 350 Hz;
and
a calcination temperature of the powder ranges from 550°C to 700°C, and a calcination time ranges from 30 minutes to 1.5 hours.

11. The preparation method of a battery composite material as claimed in claim 8, wherein the average particle size (D50) of the first product is less than 2 µm;
the rotating speed is 500 rpm;
the inlet temperature ranges from 200°C to 220°C;
the outlet temperature ranges from 85°C to 95°C; and
the calcination temperature of the powder ranges from 600°C to 650°C.

12. A preparation method of a battery composite material, comprising steps of:
reacting a precursor, with a chemical formula of FePO₄, with a first reactant containing lithium atoms and a carbon source containing carbon atoms, thereby forming a battery composite material with a chemical formula of LiFePO₄.

13. A preparation method of a precursor for a battery composite material, comprising steps of:
reacting a compound capable of releasing a phosphate ion with iron powders to produce a first product in a slurry form; and
forming a precursor via grinding, drying, and calcining, wherein the precursor has a chemical formula of FePO₄.
